# EUROPÄISCHE PATENTSCHRIFT

(11) **EP 2 965 610 B1**
(45) Veröffentlichungstag und Bekanntmachung des Hinweises auf die Patenterteilung: **15.08.2018**
(21) Anmeldenummer: 15165238.5
(22) Anmeldetag: 27.04.2015
(51) Int. Cl.: A01D 43/08, A01D 75/18

(54) **FELDHÄCKSLER MIT ÜBERLASTUNGSSCHUTZ**
FORAGE HARVESTER WITH OVERLOAD PROTECTION
RAMASSEUSE-HACHEUSE DOTÉE D'UNE PROTECTION CONTRE LES SURCHARGES

(30) Priorität: 10.07.2014 DE 102014010211
(43) Veröffentlichungstag der Anmeldung: 13.01.2016
(73) Patentinhaber: CLAAS Selbstfahrende Erntemaschinen GmbH, 33428 Harsewinkel (DE)
(72) Erfinder: Bönig Dr., Ingo, 33330 Gütersloh (DE); Diekamp, Andreas, 33335 Gütersloh (DE)

(56) Entgegenhaltungen:
- DE-A1- 10 154 874
- DE-A1- 19 632 977
- DE-A1-102012 017 149

## Beschreibung

Die vorliegende Erfindung betrifft einen selbstfahrenden Feldhäcksler. Herkömmlicherweise treibt in einem Feldhäcksler ein Verbrennungsmotor sowohl das Fahrwerk als auch eine Aufnahmevorrichtung für Erntegut und ein Häckselwerk zum Zerkleinern des Erntegutes an. Um effizient zu arbeiten, wird ein solcher Feldhäcksler von einem erfahrenen Benutzer meist an seiner Leistungsgrenze gefahren. Dies hat zur Folge, dass ein unvorhergesehener Anstieg des Leistungsbedarfs im Häckselwerk die Drehzahl des Motors drücken kann. Die Verlangsamung des Motors verzögert die Verarbeitung im Häckselwerk weiter, so dass das Erntegut sich vorm Häckselwerk staut und der Leistungsbedarf noch weiter ansteigt. Um in einem solchen Fall ein Abwürgen des Motors zu verhindern, können zwar Rutschkupplungen vorgesehen sein, die bei Überlastung die Drehmomentübertragung an das Häckselwerk unterbrechen, doch können auch diese nicht verhindern, dass der Feldhäcksler verstopft, und dass die Verstopfung erst mühsam beseitigt werden muss, bevor die Arbeit mit dem Häcksler fortgesetzt werden kann.

Aus EP 1 051 898 B1 ist ein Feldhäcksler bekannt, bei dem eine Steuerschaltung von einem Sensor ein Signal empfängt, das eine Information über den Fluss des Ernteguts an einer Erntegut-Aufnahmevorrichtung des Häckslers empfängt und anhand dieser Information die Fahrgeschwindigkeit des Feldhäckslers einstellt. Indem, wenn ein hoher Erntegutfluss gemessen wird, die Fahrgeschwindigkeit heruntergesetzt wird, kann zwar die Rate, mit der neues Erntegut von dem Feldhäcksler aufgenommen wird, verringert werden, die Fahrgeschwindigkeit hat jedoch keinen Einfluss auf die Leistung, die zum Verarbeiten des zum Zeitpunkt der Geschwindigkeitsverminderung bereits aufgenommenen Ernteguts erforderlich ist. Wenn die Menge des Ernteguts zwischen Aufnahmevorrichtung und Häckselwerk zu groß ist, kann dieses das Häckselwerk immer noch überlasten, bevor sich die Verringerung der Fahrgeschwindigkeit auf die Zuflussrate von Erntegut zum Häckselwerk auswirkt, so dass die Gefahr einer Verstopfung nicht völlig ausgeräumt ist. Aus der DE 196 32 977 A1 und der DE 10 2012 017149 A1 sind Feldhäcksler gemäß dem Oberbegriff des Patentanspruchs 1 bekannt.

Aufgabe der vorliegenden Erfindung ist, einen Feldhäcksler zu schaffen, bei dem das Risiko einer Verstopfung weiter verringert ist.

Die Aufgabe wird gelöst, indem bei einem Feldhäcksler mit einer Aufnahmevorrichtung für Erntegut, einem Verarbeitungsaggregat zum Zerkleinern des Ernteguts, einer Steuerschaltung und wenigstens einem Sensor, der ein für die Last eines Antriebs des Feldhäckslers repräsentatives Signal an die Steuerschaltung liefert, die Steuerschaltung eingerichtet ist, die Häcksellänge in Abhängigkeit von dem Signal einzustellen. Indem die Häcksellänge heraufgesetzt wird, kann bei gleichbleibendem Fluss des Ernteguts im Verarbeitungsaggregat die zu dessen Verarbeitung benötigte Leistung verringert und so einer Drehzahlabnahme des Motors entgegengewirkt werden. Im Gegensatz zu einer Verringerung der Fahrgeschwindigkeit wirkt sich diese Maßnahme sofort auf den Leistungsbedarf des Verarbeitungsaggregats aus und kann daher die Motorlast auch dann noch wirksam reduzieren, wenn sich bereits eine große Menge Erntegut zwischen der Aufnahmevorrichtung und dem Verarbeitungsaggregat befindet.

Um unter normalen Betriebsbedingungen eine gleichbleibende Häckselqualität zu gewährleisten, sollte die Steuerschaltung eingerichtet sein, die Häcksellänge konstant zu halten, solange die Last des Antriebs unter einem Grenzwert liegt, und die Häcksellänge nur bei Überschreitung des Grenzwerts heraufzusetzen.

Eine erste Möglichkeit, die Häcksellänge heraufzusetzen, ist, das Verhältnis von Fördergeschwindigkeit einer Fördereinrichtung zu Fahrgeschwindigkeit des Feldhäckslers bei hohem Erntegutdurchsatz auf einen höheren Wert einzustellen als bei niedrigem Durchsatz.

Eine zweite Möglichkeit ist, das Verhältnis von Arbeitsfrequenz des Verarbeitungsaggregats zu Fahrgeschwindigkeit des Feldhäckslers bei hohem Durchsatz auf einen niedrigeren Wert einzustellen als bei niedrigem Durchsatz.

Im Allgemeinen sind das Verarbeitungsaggregat und die Fördereinrichtung durch einen gleichen Motor angetrieben. Um Arbeitsfrequenz und Fördergeschwindigkeit unabhängig voneinander verändern zu können, kann ein Getriebe mit verstellbarer Übersetzung vorgesehen sein.

Die Steuerschaltung kann ferner eingerichtet sein, die Fahrgeschwindigkeit des Feldhäckslers in Abhängigkeit von dem Signal einzustellen, insbesondere bei hoher Last die Fahrgeschwindigkeit herabzusetzen.

Bei dem Sensor kann es sich um einen Drehzahlsensor handeln. Da die Drehzahl des Motors von einem durch ihn angetriebenen Verbraucher wie etwa Fahrwerk, Aufnahmeeinrichtung, Verarbeitungsaggregat etc. beeinflusst wird, ist eine Überlastung des Motors anhand einer Abnahme der Drehzahl leicht zu erfassen, unabhängig davon, welcher der angeschlossenen Verbraucher gerade einen hohen Leistungsbedarf hat.

Als Sensor kommt auch ein Drehmomentsensor in Betracht; insbesondere wenn eine rotierende Welle existiert, die allein das Verarbeitungsaggregat und/oder die Aufnahmeeinrichtung antreibt, kann anhand einer Messung des an dieser Welle wirkenden Drehmoments die vom Häckselwerk und/oder ihrer Aufnahmeeinrichtung benötigte Antriebsleistung unbeeinflusst von der Leistungsaufnahme des Fahrwerks erfasst werden.

Wenn die Welle, an der der Drehmomentsensor angeordnet ist, allein die Aufnahmeeinrichtung, aber nicht das Häckselwerk antreibt, kann die Steuerschaltung anhand des erfassten Drehmoments die Belastung prognostizieren, die das Erntegut am Häckselwerk hervorrufen wird, sobald es dieses erreicht hat, und kann so durch Heraufsetzen der Häcksellänge den Auswirkungen eines erhöhten Erntegutdurchsatzes entgegensteuern, noch bevor sich dieser auf den Leistungsbedarf des Häckselwerks auswirkt.

Der Drehmomentsensor kann auch an einer Welle angeordnet sein, die die Aufnahmeeinrichtung und das Häckselwerk antreibt. Schwankungen des Drehmomentbedarfs der Aufnahmeeinrichtung sind hier zum gleichen Zeitpunkt nachweisbar wie an einer allein die Aufnahmeeinrichtung antreibenden Welle; zusätzlich sind aber an dieser Stelle auch die Auswirkungen schwankenden Erntegutdurchsatzes am Häckselwerk mess- und korrigierbarbar: War die Anpassung der Häcksellänge nicht stark genug, dann kommt es, wenn ein verstärkter Erntegutstrom am Häckselwerk ankommt, nochmals zu einer Steigerung des Drehmoments, der durch eine neuerliche Heraufsetzung der Häcksellänge entgegengewirkt werden kann. War die Anpassung hingegen stärker als nötig, dann ist die Drehmomentbelastung am Häckselwerk auch dann, wenn der verstärkte Erntegutstrom das Häckselwerk erreicht hat, noch niedriger als zuvor während der Verarbeitung eines normal dichten Bestandes mit Soll-Häcksellänge, und die Häcksellänge kann wieder leicht reduziert werden.

Der Sensor könnte auch Fernerkundungsmittel wie etwa eine Kamera und eine Bildauswertungseinheit umfassen, um die Bestandsdichte von Erntegut zu erfassen, noch bevor dieses von der Aufnahmeeinrichtung aufgenommen worden ist.

Wenn die Steuerschaltung aktiv geworden ist und die Häcksellänge heraufgesetzt hat, um einer Überlastung des Motors entgegenzusteuern, kann in einer nicht erfindungsgemäßen Ausgestaltung vorgesehen sein, dass die Häcksellänge von der Steuerschaltung erst dann wieder herabgesetzt wird, wenn letztere durch eine Benutzereingabe zurückgesetzt worden ist. So bleibt es dem Benutzer überlassen, zu beurteilen, wann ein Bereich mit erhöhter Bestandsdichte durchfahren ist und eine Überlastung daher nicht mehr zu erwarten ist.

Die Steuerschaltung ist aber erfindungsgemäß eingerichtet, eine heraufgesetzte Häcksellänge selbsttätig zurückzusetzen, wenn eine Verminderung der Last erfasst wird. Um eine unnötig häufige Korrektur der Häcksellänge durch die Steuerschaltung zu vermeiden, ist die Verminderung der Last, bei der die heraufgesetzte Häcksellänge rückgängig gemacht wird, prozentual stärker als das Verhältnis der Häcksellängen vor und nach der Heraufsetzung.

Weitere Merkmale und Vorteile der Erfindung ergeben sich aus der nachfolgenden Beschreibung von Ausführungsbeispielen unter Bezugnahme auf die beigefügten Figuren. Es zeigen:
Fig. 1 eine schematische Darstellung eines erfindungsgemäßen Feldhäckslers in Seitenansicht;
Fig. 2 ein Blockdiagramm einer ersten Ausgestaltung eines Antriebsstrangs des Feldhäckslers; und
Fig. 3 ein Blockdiagramm einer zweiten Ausgestaltung des Antriebsstrangs

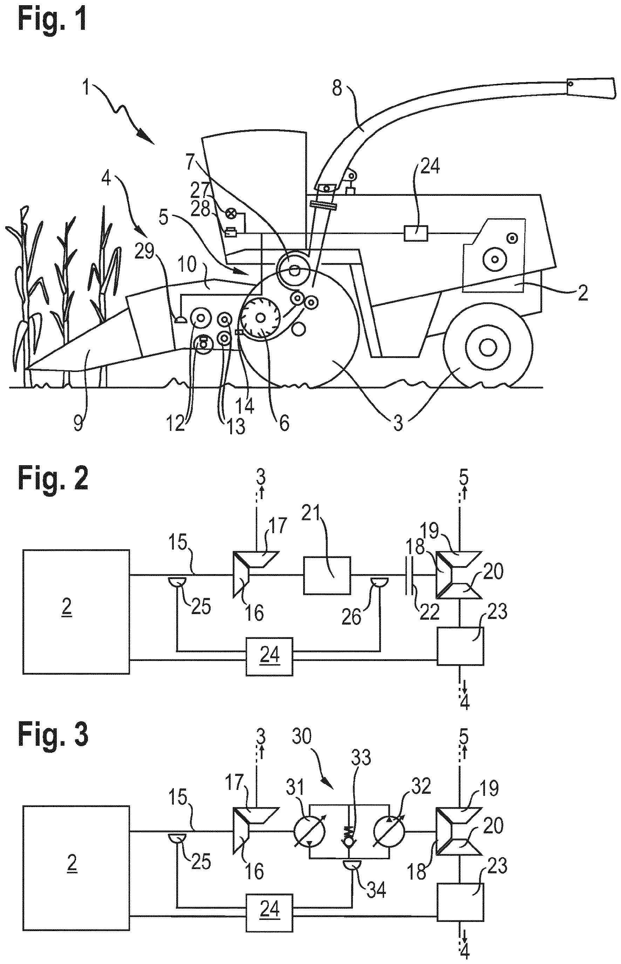

Fig. 1 zeigt in schematischer Darstellung einen Feldhäcksler 1. Ein Dieselmotor 2 treibt über ein an sich bekanntes, in Fig. 1 nicht dargestelltes Verteilergetriebe einerseits ein Fahrwerk 3 und andererseits eine Aufnahmevorrichtung 4 für Erntegut sowie ein Verarbeitungsaggregat 5 an.

Die Aufnahmevorrichtung 4 umfasst in an sich bekannter Weise einen in Anpassung an das zu bergende Pflanzenmaterial austauschbaren Erntevorsatz 9. Eine Fördereinrichtung 10, die das Erntegut von dem Erntevorsatz 9 übernimmt, umfasst mehrere Walzenpaare 12, 13, die jeweils einen Spalt begrenzen und gegensinnig drehangetrieben sind, um das durch den Spalt hindurch laufende Erntegut dem Verarbeitungsaggregat 5 zuzuführen.

Das Verarbeitungsaggregat 5 umfasst eine drehangetriebene Häckseltrommel 6, eine ortsfeste Schneidkante 14, über die das Erntegut von dem benachbarten Walzenpaar 13 des Schrägförderers 10 hindurchgeschoben wird, um durch Zusammenwirken der Schneidkante 14 mit der Häckseltrommel 6 zerkleinert zu werden, und einen Nachbeschleuniger 7, der dem zerkleinerten Erntegut die nötige Geschwindigkeit verleiht, um einen Auswurfkrümmer 8 zu durchlaufen und in ein (nicht dargestelltes) Begleitfahrzeug übergeladen zu werden. Die Häcksellänge, mit der das Erntegut zerkleinert wird, ergibt sich aus dem Verhältnis der Fördergeschwindigkeit der Walzen 13 zum Zeitabstand zwischen aufeinanderfolgenden Durchgängen von Klingen der Häckseltrommel 6 an der Schneidkante 14.

Fig. 2 zeigt ein Blockdiagramm des Antriebsstrangs des Feldhäckslers in einer ersten Ausgestaltung. Eine Abtriebswelle 15 des Motors 2 treibt das Fahrwerk 3 über ein erstes Zahnradpaar 16, 17. Ein weiteres Zahnrad 18, das, hier mit Zahnrädern 19, 20 kämmend, die Aufnahmevorrichtung 4 und das Verarbeitungsaggregat 5 antreibt, ist hier über ein Getriebe 21 mit verstellbarer Übersetzung an die Abtriebswelle 15 gekoppelt. Das am Getriebe eingestellte Übersetzungsverhältnis bestimmt die Aufteilung der Leistung des Motors 2 auf das Fahrwerk 3 und die über das Getriebe 21 angeschlossenen Verbraucher Aufnahmevorrichtung 4 und Verarbeitungsaggregat 5 und kann vom Fahrer jeweils passend zur Art des Ernteguts und dessen abgeschätzter Bestandsdichte eingestellt werden.

Zwischen dem Getriebe 21 und dem Zahnrad 18 kann eine Rutschkupplung 22 vorgesehen sein, um im Falle einer Blockade, etwa durch einen von der Aufnahmevorrichtung 4 aufgenommenen Fremdkörper oder eine übergroße Menge an Erntegut in der Aufnahmevorrichtung 4, den Drehmomentfluss vom Motor 2 unterbrechen und ein Abwürgen des Motors 2 vermeiden zu können.

Zwischen einem der Zahnräder 19, 20 und dem von ihm angetriebenen Aggregat, hier zwischen dem Zahnrad 20 und der Aufnahmevorrichtung 4, ist ein weiteres Getriebe 23 mit verstellbarer Übersetzung vorgesehen, das es erlaubt, die Drehgeschwindigkeit der Walzen 12, 13 bei gleichbleibender Geschwindigkeit der Häckseltrommel 6 zu variieren und so die Häcksellänge des Ernteguts auf einen jeweils gewünschten Wert einzustellen. Das Übersetzungsverhältnis des Getriebes 23 ist gesteuert durch eine elektronische Steuerschaltung 24, die ferner mit diversen Sensoren, hier einem Drehzahlsensor 25 an der Abtriebswelle 15 und einem Drehmomentsensor 26 verbunden ist, um Messwerte von diesen zu empfangen und die Leistung des Motors 2 und das Übersetzungsverhältnis des Getriebes 23 anhand dieser Daten zu steuern.

Wenn der Feldhäcksler 1 in eine Fläche einfährt, in der die Bestandsdichte des Ernteguts höher ist als der Schätzwert, anhand dessen der Fahrer das Übersetzungsverhältnis des Getriebes 21 eingestellt hat, dann resultiert dies zunächst in einer höheren Belastung der Aufnahmevorrichtung 4. Die daraus resultierende Zunahme des an die Aufnahmevorrichtung 4 übertragenen Drehmoments könnte mithilfe eines am Antriebsstrang zwischen dem Zahnrad 20 und der Aufnahmevorrichtung 4 angeordneten Drehmomentsensors erfasst werden; in der in Fig. 2 gezeigten Ausgestaltung dient zum gleichen Zweck der Drehmomentsensor 26, der zwischen dem Getriebe 21 und dem Zahnrad 18 angeordnet ist. An dieser Stelle erfasst der Drehmomentsensor 26 auch das an die Häckseltrommel 6 übertragene Drehmoment.

Eine Zunahme des vom Sensor 26 erfassten Drehmoments bei gleichbleibender Fahrgeschwindigkeit des Feldhäckslers ist im Allgemeinen auf eine erhöhte Bestandsdichte des von der Aufnahmevorrichtung 4 aufgenommenen Ernteguts schließen, da es zu einer Steigerung des Drehmoments an der Häckseltrommel 6 erst dann kommt, wenn der aus der erhöhten Bestandsdichte resultierende verstärkte Erntegutstrom sich durch die Aufnahmevorrichtung 4 ausgebreitet hat und die Häckseltrommel 6 erreicht. Die hierfür benötigte Zeit beträgt bei gegenwärtigen Feldhäckslern typischerweise ein paar Sekunden. In dieser Zeit reagiert die Steuerschaltung 24, indem sie das Übersetzungsverhältnis des Getriebes 23 in Richtung einer erhöhten Fördergeschwindigkeit der Walzen 13 verstellt. Die erhöhte Fördergeschwindigkeit hat zur Folge, dass die Schichtdicke des Pflanzenmaterials in der Aufnahmevorrichtung 4 und insbesondere im Schrägförderer 10 begrenzt bleibt, und verhindert so eine Verstopfung der Erntevorrichtung 4. Da die Häckseltrommel 6 in Folge dieser Verstellung nicht schneller läuft, nimmt die Häcksellänge zu, das heißt das Erntegut wird gröber gehäckselt, aber die Leistungsaufnahme der Häckseltrommel 6 bleibt im Wesentlichen unverändert. So kann eine Verarbeitung des aufgenommenen Pflanzenmaterials ohne eine wesentliche Steigerung der Motorlast sichergestellt werden.

In der Fahrerkabine des Feldhäckslers 1 kann ein Signalgeber 27 vorgesehen sein, um den Fahrer auf den Eingriff der Steuerschaltung 24 und die deswegen vom Sollwert abweichende Häcksellänge hinzuweisen und ihn dadurch zu veranlassen, das Übersetzungsverhältnis des Getriebes 21 so anzupassen, dass der Anteil der Motorleistung, der auf Aufnahmevorrichtung 4 und Verarbeitungsaggregat 5 entfällt, zu Lasten des Fahrwerks 3 zunimmt. Dadurch wird der Feldhäcksler 1 bei gleichbleibender Motorleistung etwas langsamer, gleichzeitig steht für Aufnahmevorrichtung 4 und Verarbeitungsaggregat 5 mehr Antriebsleistung zur Verfügung. Dies führt zunächst dazu, dass Aufnahmevorrichtung 4 und Verarbeitungsaggregat 5 schneller laufen, und die Schichtdicke des Ernteguts in der Aufnahmevorrichtung abnimmt.

Einer Ausgestaltung zufolge obliegt die Beurteilung, ob die Korrektur der Leistungsverteilung ausreichend ist, dem Fahrer, und in der Fahrerkabine ist ferner ein Bedienelement 28 vorgesehen, dass der Fahrer betätigen kann, um eine Rückkehr der Häcksellänge zum voreingestellten Sollwert anzuordnen.

Alternativ kann die Steuerschaltung mit einem Sensor 29 zum Erfassen der Schichtdicke in der Aufnahmevorrichtung 4 verbunden und eingerichtet sein, selbsttätig den Sollwert der Häcksellänge wieder einzustellen, wenn die Schichtdicke klein genug ist, um dies zuzulassen.

Wenn der Motor 2 bei einer festen Leistung, insbesondere bei Volllast, arbeitet, führt eine Zunahme des Leistungsbedarfs der Aufnahmevorrichtung 4 aufgrund von erhöhter Bestandsdichte zu einer Verringerung der Drehzahl des Motors 2. Daher kann einer Ausgestaltung der Erfindung zu Folge die oben beschriebene automatische Reaktion der Steuerschaltung 24 auf eine erhöhte Bestandsdichte auch durch eine Reduzierung der vom Sensor 25 erfassten Motordrehzahl ausgelöst werden. Vorzugsweise wertet die Steuerschaltung 24 Messwerte beider Sensoren 25, 26 gemeinsam aus, um Situationen, in denen die Motorlast aufgrund erhöhter Bestandsdichte steigt, zuverlässig zu erkennen.

Abweichend von der Ausgestaltung der Fig. 2, in der die Kraftübertragung vom Motor 2 zu den diversen Verbrauchern ausschließlich auf mechanischen Mitteln basiert, kann auf einem Teil des Antriebsstrangs, wie in Fig. 3 gezeigt, auch eine hydraulische Kraftübertragung vorgesehen sein. Hier ist das Getriebe 21 durch ein hydrostatisches Getriebe 30 mit einer Pumpe 31 und einem Hydromotor 32 ersetzt, die in einem Hydraulikkreis miteinander verbunden sind und die durch Verstellen ihrer jeweiligen Schluckmengen eine stufenlose Veränderung der Übersetzung zwischen der Abtriebswelle 15 und dem Zahnrad 18 ermöglichen. Die Rutschkupplung 22 ist hier ersetzt durch ein Überdruckventil 33, das Hochdruck- und Niederdruckteil des Hydraulikkreises miteinander verbindet und öffnet, wenn in Folge zu hoher Belastung der Aufnahmevorrichtung 4 und der Häckseltrommel 6 die Druckdifferenz zwischen Hoch- und Niederdruckteil einen vorgegebenen Stellwert übersteigt. Um eine solche Situation zu vermeiden, ist am Hochdruckteil oder zwischen Hochdruck- und Niederdruckteil ein Drucksensor 34 angeschlossen, um eine Drucksteigerung zu erfassen, bevor das Überdruckventil 33 wirksam wird. Wie im Falle der Fig. 2 geht eine solche Steigerung regelmäßig auf eine Lastzunahme in der Aufnahmevorrichtung 4 zurück, und die Steuerschaltung passt das Übersetzungsverhältnis des Getriebes 23 an, bevor der verstärkte Erntegutstrom die Häckseltrommel 6 erreicht, und verhindert so eine Druckzunahme, die tatsächlich zum Öffnen des Überdruckventils 33 und damit zum Steckenbleiben der Häckseltrommel 6 und zu Verstopfung führen würde.

In der Praxis können die Ansätze der Fig.2 und Fig. 3 miteinander kombiniert werden, indem die Häckseltrommel 6 über die Rutschkupplung 22, die Aufnahmevorrichtung 4 hingegen über das hydrostatische Getriebe 30 angetrieben ist.

### Bezugszeichen

- 1: Feldhäcksler
- 2: Motor
- 3: Fahrwerk
- 4: Aufnahmevorrichtung
- 5: Verarbeitungsaggregat
- 6: Häckseltrommel
- 7: Nachbeschleuniger
- 8: Auswurfkrümmer
- 9: Erntevorsatz
- 10: Schrägförderer
- 12: Walzenpaar
- 13: Walzenpaar
- 14: Schneidkante
- 15: Abtriebswelle
- 16: Zahnrad
- 17: Zahnrad
- 18: Zahnrad
- 19: Zahnrad
- 20: Zahnrad
- 21: Getriebe
- 22: Rutschkupplung
- 23: Getriebe
- 24: Steuerschaltung
- 25: Drehzahlsensor
- 26: Drehmomentsensor
- 27: Signalgeber
- 28: Bedienelement
- 29: Schichtdickensensor
- 30: hydrostatisches Getriebe
- 31: Pumpe
- 32: Hydromotor
- 33: Überdruckventil
- 34: Drucksensor

## Patentansprüche

1. Feldhäcksler (1) mit einer Aufnahmevorrichtung (4) für Erntegut, einem Verarbeitungsaggregat (5) zum Zerkleinern des Ernteguts, einer Steuerschaltung (24) und wenigstens einem Sensor (25, 26), der ein für die Last eines Antriebs (2) des Feldhäckslers (1) repräsentatives Signal an die Steuerschaltung (24) liefert, wobei der Feldhäcksler (1) einen Verbrennungsmotor (2) umfasst, der zum Antrieb eines Fahrwerks (3), der Aufnahmevorrichtung (4) und des Verarbeitungsaggregates (5) vorgesehen ist, wobei der Antrieb (2) der Verbrennungsmotor ist, und dass die Steuerschaltung (24) eingerichtet ist, die Häcksellänge in Abhängigkeit von dem Signal einzustellen, **dadurch gekennzeichnet, dass** die Steuerschaltung (24) eingerichtet ist, eine heraufgesetzte Häcksellänge bei Erfassung einer Verminderung der Last rückgängig zu machen, wobei die Verminderung der Last, bei der die heraufgesetzte Häcksellänge rückgängig gemacht wird, prozentual stärker ist als das Verhältnis der Häcksellängen vor und nach der Heraufsetzung.

2. Feldhäcksler nach Anspruch 1, **dadurch gekennzeichnet, dass** die Steuerschaltung (24) eingerichtet ist, die Häcksellänge konstant zu halten, solange die Last unter einem Grenzwert liegt, und sie bei Überschreitung des Grenzwerts heraufzusetzen.

3. Feldhäcksler nach Anspruch 1 oder 2, **gekennzeichnet durch** eine Fördereinrichtung (10) zum Fördern des Ernteguts zum Verarbeitungsaggregat (5), wobei die Steuerschaltung (24) eingerichtet ist, das Verhältnis von Fördergeschwindigkeit der Fördereinrichtung (10) zu Fahrgeschwindigkeit des Feldhäckslers (1) bei hohem Durchsatz auf einen höheren Wert einzustellen als bei niedrigem Durchsatz.

4. Feldhäcksler nach einem der vorhergehenden Ansprüche, **dadurch gekennzeichnet, dass** die Steuerschaltung (24) eingerichtet ist, das Verhältnis von Arbeitsfrequenz des Verarbeitungsaggregats (5) zu Fahrgeschwindigkeit des Feldhäckslers (1) bei hohem Durchsatz auf einen niedrigeren Wert einzustellen als bei niedrigem Durchsatz.

5. Feldhäcksler nach einem der vorhergehenden Ansprüche, **dadurch gekennzeichnet, dass** die Steuerschaltung (24) ferner eingerichtet ist, die Fahrgeschwindigkeit des Feldhäckslers (1) in Abhängigkeit von dem Signal einzustellen.

6. Feldhäcksler nach einem der vorhergehenden Ansprüche, **dadurch gekennzeichnet, dass** der Sensor ein Drehzahlsensor (25) ist.

7. Feldhäcksler nach einem der Ansprüche 1 bis 5, **dadurch gekennzeichnet, dass** das Verarbeitungsaggregat (5) und/oder die Aufnahmeeinrichtung (4) über eine rotierende Welle (15) angetrieben ist und der Sensor ein Drehmomentsensor (26) zum Erfassen eines auf die Welle wirkenden Drehmoments ist.

8. Feldhäcksler nach einem der Ansprüche 1 bis 5, **dadurch gekennzeichnet, dass** das Verarbeitungsaggregat (5) und/oder die Aufnahmeeinrichtung (4) hydraulisch angetrieben ist und der Sensor ein Drucksensor (34) ist.

## Claims

1. A forage harvester (1) comprising a pick-up device (4) for crop material, a processing assembly (5) for chopping the crop material, a control circuit (24) and at least one sensor (25, 26) which delivers to the control circuit (24) a signal representative of the load of a drive (2) of the forage harvester (1), wherein the forage harvester (1) includes an internal combustion engine (2) provided for driving a running gear (3), the pick-up device (4) and the processing assembly (5), wherein the drive (2) is the internal combustion engine and the control circuit (24) is adapted to adjust the chaff length in dependence on the signal, **characterised in that** the control circuit (24) is adapted to reverse an increased chaff length upon detection of a reduction in the load, wherein the reduction in the load at which the increased chaff length is reversed is greater in percentage terms than the ratio of the chaff lengths prior to and after the increase.

2. A forage harvester according to claim 1 **characterised in that** the control circuit (24) is adapted to keep the chaff length constant as long as the load is below a limit value and to increase it when the limit value is exceeded.

3. A forage harvester according to claim 1 or claim 2 **characterised by** a conveyor device (10) for conveying the crop material to the processing assembly (5), wherein the control circuit (24) is adapted to adjust the ratio of the conveyor speed of the conveyor device (10) to the travel speed of the forage harvester (1) to a higher value in the case of a high throughput than in the case of a low throughput.

4. A forage harvester according to one of the preceding claims **characterised in that** the control circuit (24) is adapted to adjust the ratio of the working frequency of the processing assembly (5) to the travel speed of the forage harvester (1) to a lower value in the case of a high throughput than in the case of a low throughput.

5. A forage harvester according to one of the preceding claims **characterised in that** the control circuit (24) is further adapted to adjust the travel speed of the forage harvester (1) in dependence on the signal.

6. A forage harvester according to one of the preceding claims **characterised in that** the sensor is a rotary speed sensor (25).

7. A forage harvester according to one of claims 1 to 5 **characterised in that** the processing assembly (5) and/or the pick-up device (4) is driven by way of a rotating shaft (15) and the sensor is a torque sensor (26) for detecting a torque acting on the shaft.

8. A forage harvester according to one of claims 1 to 5 **characterised in that** the processing assembly (5) and/or the pick-up device (4) is hydraulically driven and the sensor is a pressure sensor (34).

## Revendications

1. Ensileuse (1) comprenant un dispositif récepteur (4) pour du produit récolté, un organe de traitement (5) pour broyer le produit récolté, un circuit de commande (24) et au moins un capteur (25, 26) qui fournit au circuit de commande (24) un signal représentatif de la charge d'un moyen d'entraînement (2) de l'ensileuse (1), l'ensileuse (1) comportant un moteur à combustion interne (2) qui est prévu pour l'entraînement d'un train de roulement (3), du dispositif récepteur (4) et de l'organe de traitement (5), le moyen d'entraînement (2) étant le moteur à combustion interne, et en ce que le circuit de commande (24) est conçu pour régler la longueur de hachage en fonction du signal, **caractérisée en ce que** le circuit de commande (24) est conçu pour annuler une longueur de hachage augmentée en cas de détection d'une réduction de la charge, la réduction de la charge à laquelle la longueur de hachage augmentée est annulée étant supérieure en pourcentage au rapport des longueurs de hachage avant et après l'augmentation.

2. Ensileuse selon la revendication 1, **caractérisée en ce que** le circuit de commande (24) est conçu pour maintenir la longueur de hachage constante tant que la charge est inférieure à une valeur limite et pour l'augmenter en cas de surpassement de la valeur limite.

3. Ensileuse selon la revendication 1 ou 2, **caractérisée par** un équipement d'amenée (10) pour amener le produit récolté à l'organe de traitement (5), le circuit de commande (24) étant conçu pour régler, à haut débit, le rapport de la vitesse d'amenée de l'équipement d'amenée (10) à la vitesse de marche de l'ensileuse (1) sur une valeur plus élevée qu'à bas débit.

4. Ensileuse selon une des revendications précédentes, **caractérisée en ce que** le circuit de commande (24) est conçu pour régler, à haut débit, le rapport de la fréquence de travail de l'organe de traitement (5) à la vitesse de marche de l'ensileuse (1) sur une valeur plus basse qu'à bas débit.

5. Ensileuse selon une des revendications précédentes, **caractérisée en ce que** le circuit de commande (24) est également conçu pour régler la vitesse de marche de l'ensileuse (1) en fonction du signal.

6. Ensileuse selon une des revendications précédentes, **caractérisée en ce que** le capteur est un capteur de vitesse de rotation (25).

7. Ensileuse selon une des revendications précédentes 1 à 5, **caractérisée en ce que** l'organe de traitement (5) et/ou l'équipement récepteur (4) sont entraînés par l'intermédiaire d'un arbre rotatif (15), et le capteur est un capteur de couple de rotation (26) pour détecter un couple de rotation agissant sur l'arbre.

8. Ensileuse selon une des revendications 1 à 5, **caractérisée en ce que** l'organe de traitement (5) et/ou l'équipement récepteur (4) sont entraînés hydrauliquement, et le capteur est un capteur de pression (34).
